# EUROPÄISCHE PATENTSCHRIFT

(11) **EP 2 517 284 B1**
(45) Veröffentlichungstag und Bekanntmachung des Hinweises auf die Patenterteilung: **06.12.2017**
(21) Anmeldenummer: 10803091.7
(22) Anmeldetag: 23.12.2010
(51) Int. Cl.: H01M 2/10, H01M 10/61, H01M 10/625, H01M 10/647, H01M 10/6557, B60L 11/18

(54) **AKKUMULATOR MIT SPANNUNGSERZEUGENDEN ZELLEN UND DAZWISCHEN LIEGENDEN AUSGLEICHSPLATTEN**
BATTERY WITH VOLTAGE GENERATING CELLS AND COMPENSATION PLATES ARRANGED IN BETWEEN
BATTERIE DE CELLULES À PRODUCTION DE VOLTAGE ET DES PLAQUES DE COMPENSATION INTERPOSÉES

(30) Priorität: 23.12.2009 US 289894 P; 18.06.2010 US 356071 P; 18.06.2010 US 356239 P
(43) Veröffentlichungstag der Anmeldung: 31.10.2012
(73) Patentinhaber: Samsung SDI Co., Ltd., Yongin-si, Gyeonggi-do (KR)
(72) Erfinder: MICHELITSCH, Martin, A-8062 Kumberg (AT); PUCHER, Matthias, A-8052 Graz (AT); ROEPKE, Stefan, A-8041 Graz (AT); UNTERBERGER, Rainer, A-8041 Graz (AT)
(74) Vertreter: Gulde & Partner
(86) Internationale Anmeldenummer: PCT/EP2010/070694
(87) Internationale Veröffentlichungsnummer: WO 2011/076937

(56) Entgegenhaltungen:
- EP-A2- 1 944 824
- WO-A1-01/28008
- DE-A1- 10 002 142
- DE-A1- 10 223 782
- JP-A- 2008 053 072
- US-A1- 2006 115 719

## Beschreibung

### TECHNISCHES GEBIET

Die Erfindung betrifft einen Akkumulator mit mehreren spannungserzeugenden Zellen.

### STAND DER TECHNIK

Akkumulatoren werden in aller Regel aus mehreren spannungserzeugenden Zellen aufgebaut, um eine geforderte Spannung, einen geforderten Strom und/oder eine geforderte Kapazität liefern zu können. Insbesondere bei vergleichsweise leistungsfähigen Akkumulatoren, wie sie häufig für Elektrokraftfahrzeuge eingesetzt werden, werden häufig einige hundert Zellen miteinander verschaltet. Dies führt zu einigen Problemen, denn die hohen Ströme, die beim Laden und Entladen auftreten führen zu einer beträchtlichen Erwärmung des Akkumulators, weswegen dieser häufig gekühlt wird. Um den Akkumulator auch im Winter rasch auf optimale Betriebstemperatur bringen zu können, ist es auch bekannt, den Akkumulator zu beheizen. Ein weiteres Problem beim Betrieb von Akkumulatoren, insbesondere wenn eine große Anzahl von Zellen aneinandergereiht wird, besteht darin, dass diese ihr Volumen abhängig von Ladezustand und Temperatur ändern. Damit sich keine übermäßig hohen Zelldrücke aufbauen können, welche die Zelle unter Umständen beschädigen könnten, wird das "Atmen" der Zellen häufig durch eine entsprechende Konstruktion des Akkumulators ermöglicht.

Nachteilig an den bekannten Lösungen ist, dass diese zumeist technisch relativ aufwändig sind und somit den Akkumulator verteuern. Zudem führen technisch aufwändige Lösungen generell zu einer geringeren Betriebssicherheit des Akkumulators.

Die EP 1944824 A2 beschreibt einen elektrischen Energiespeicher, insbesondere für ein Kraftfahrzeug, umfassend eine Mehrzahl von Flachzellen, wobei jede der Flachzellen eine erste flache Seite und eine hierzu im Wesentlichen parallele zweite flache Seite aufweist, wobei die Mehrzahl der Flachzellen unter im Wesentlichen paralleler Anordnung der flachen Seiten stapelartig übereinander angeordnet ist, wobei zumindest eine Kühlplatte zwischen zwei benachbarten Flachzellen des Stapels angeordnet ist, wobei die Kühlplatte eine Mehrzahl von mit Luft durchströmbaren Kanälen zur Abführung von Wärme umfasst.

Aus der US 2006/0115719 A1 ist eine Batterie bekannt, bei welcher die spannungserzeugenden Zellen und Zwischenelemente durch Zugbänder oder Zugstangen aneinander gedrückt werden.

Die DE 10223782 A1 offenbart eine Batterie mit wenigstens einer elektrochemischen Speicherzelle und einer Kühleinrichtung, wobei die wenigstens eine elektrochemische Speicherzelle zwischen Teilen der Kühleinrichtung angeordnet ist. Die Kühleinrichtung ist von einem flüssigen Kühlmedium durchströmt.
Jede der elektrochemischen Speicherzellen ist in einer Öffnung der Kühleinrichtung aufgenommen und steht mit jeweils wenigstens einer in einer Richtung senkrecht zu einer Längsachse der elektrochemischen Speicherzelle gekrümmten Außenfläche zumindest teilweise in kraftschlüssigem Kontakt mit der Kühleinrichtung. Die Kühleinrichtung weist in den Bereichen des kraftschlüssigen Kontakts wenigstens eine Dehnfuge auf.
Die DE 10002142 beschreibt eine Stromquelle mit wiederaufladbaren Batterien, wobei die Stromquelle eine Vielzahl von parallel orientierten Stromversorgungsmodulen in einem Haltergehäuse enthält. Das Haltergehäuse ist mit Deckgehäusen auf beiden Seiten und mit zwischen denselben angeordneten Zwischengehäusen versehen. Halterippen stehen von den Innenseiten der Deckgehäuse und von beiden Seiten der Zwischengehäuse vor, um Stromversorgungsmodule in einer Vielzahl von Reihen anzuordnen und sie in festen Positionen zu halten. Die Deckgehäuse auf beiden Seiten und die Zwischengehäuse sind miteinander verbunden, um die Vielzahl von Reihen von Stromversorgungsmodulen zwischen sich aufzunehmen und mittels Halterippen in festen Positionen zu halten.
Aus der WO 01/28008 A1 schließlich ist ein Batteriecontainer bekannt, welcher der Aufnahme von Batteriezellen dient und flexible Rippen aufweist.

### OFFENBARUNG DER ERFINDUNG

Aufgabe der Erfindung ist es daher, einen verbesserten Akkumulator beziehungsweise eine technisch einfache Lösung für die zuvor genannten Probleme anzugeben.

Die Erfindung wird durch einen Akkumulator wie in den Ansprüchen offenbart gelöst, bei dem zumindest zwischen zwei spannungserzeugenden Zellen ein plattenförmiges Zwischenelement angeordnet ist, welches zumindest auf einer Seite elastische Rippen aufweist.

Erfindungsgemäß kann ein Längenausgleich zwischen den Zellen erfolgen, indem die Rippen mehr oder weniger verformt werden. In den Zellen kann sich somit kein übermäßiger Druck aufbauen. Die Federkonstante beziehungsweise Elastizität des plattenförmigen Zwischenelements kann dabei nicht nur durch entsprechende Wahl des Materials der Platte, sondern auch durch die Gestaltung der Rippen beeinflusst werden. Beispielsweise führen dicke Rippen zu einer höheren Federkonstante als dünne Rippen. Die genannte Federkonstante beziehungsweise Elastizität kann somit in weiten Grenzen variiert werden.

Im Rahmen der Erfindung bedeuten "einander benachbarte Zellen" Zellen, zwischen denen kein oder nur ein geringer Abstand gegeben ist. Die Zellen können einander berühren, müssen dies aber nicht zwingend tun. Denkbar ist auch, dass zwischen den Zellen weitere Bauteile angeordnet sind, welche den Zwischenraum zwischen zwei Zellen zum Teil oder komplett ausfüllen.

Vorteilhafte Ausgestaltungen und Weiterbildungen der Erfindung ergeben sich nun aus den Unteransprüchen, sowie aus der Beschreibung in Zusammenschau mit den Figuren.

Vorteilhaft ist es, wenn das plattenförmige Zwischenelement beidseitig elastische Rippen aufweist. Das plattenförmige Zwischenelement kann somit weicher gestaltet werden, das heißt dessen Federkonstante relativ klein gehalten werden.

Besonders vorteilhaft ist es, wenn die Rippen auf einer Seite des plattenförmigen Zwischenelements gegenüber den Rippen auf der anderen Seite des plattenförmigen Zwischenelements versetzt sind. Auf diese Weise wird der mittlere Bereich des plattenförmigen Zwischenelements bei der Kompression desselben schlangenförmig beziehungsweise S-förmig verformt, da die Rippen der einen Seite in die Zwischenräume auf der anderen Seite des plattenförmigen Zwischenelements drücken. Somit kann ein besonders weiches plattenförmiges Zwischenelement hergestellt werden, dessen Federkonstante besonders klein ist.

Vorteilhaft ist es weiterhin, wenn die elastischen Rippen bezogen auf den Querschnitt schräg ausgerichtet sind. Auf diese Weise werden die Rippen bei einer Ausdehnung der Zelle nicht bloß zusammengedrückt, sondern wegen der schrägen Ausrichtung auch verbogen. Somit ist die Federkonstante des plattenförmigen Zwischenelements auch von der Schräge der Rippen abhängig. Je schräger die Rippen sind, desto weicher wird das plattenförmige Zwischenelement. Eine Federkonstante kann somit besonders leicht eingestellt werden.

Besonders vorteilhaft ist es, wenn die Rippen an einer Zelle anliegen und eine Rille zwischen zwei Rippen gemeinsam mit der Zelle einen Kanal begrenzt, welcher zur Führung eines gasförmigen oder flüssigen Wärmeträgers vorgesehen ist. Bei dieser Variante der Erfindung erfüllen die Rippen somit einen Doppelnutzen, indem sie einerseits einen Längenausgleich zwischen den Zellen ermöglichen, andererseits gemeinsam mit den Zellen aber auch Kanäle bilden, durch die ein Wärmeträger strömen kann. Durch den erwähnten Doppelnutzen kann die Anzahl der für einen Akkumulator benötigten Bauteile merklich reduziert werden. Besonders vorteilhaft ist es in diesem Zusammenhang, wenn das plattenförmige Zwischenelement beidseitig elastische Rippen aufweist, da so Zellen auf beiden Seiten der Platte temperiert werden können.

Günstig ist es, wenn zumindest zwei spannungserzeugende Zellen und zumindest ein Zwischenelement miteinander verklebt sind. Bei dieser Variante der Erfindung bilden miteinander verklebte Zellen einen Verbund, über den Kräfte geleitet werden können. Vorteilhaft werden für die Verbindung der Zellen keine weiteren Bauteile benötigt.

Günstig ist es weiterhin, wenn zumindest zwei spannungserzeugende Zellen und zumindest ein Zwischenelement miteinander verschraubt sind. Auf diese Weise können die Zellen auch wieder voneinander gelöst werden, was insbesondere bei der Reparatur oder Entsorgung eines Akkumulators Vorteile bietet.

Günstig ist es darüber hinaus, wenn zumindest zwei spannungserzeugende Zellen und zumindest ein Zwischenelement mit Hilfe von Zugbändern oder Zugstangen, welche eine Druckvorspannung erzeugen, aneinander gedrückt werden. Auf diese Weise wird eine Druckvorspannung erzeugt, die ein Auseinanderklaffen des Spalts zwischen zwei Zellen verhindert, wenn in den Verbund aus Zellen und Zwischenelement eine Biegebeanspruchung eingeleitet wird, beispielsweise wenn der Verbund seitlich hochgehoben wird. Anstelle von Spann-/Zugbändern können auch Zugstangen vorgesehen sein, z.B. Stiftschrauben, welche die Zellen über Platten aneinander drücken. Selbstverständlich können diese Maßnahmen auch zusätzlich zu einer Verklebung vorgesehen werden.

Besonders vorteilhaft ist es, wenn der Akkumulator ein Tragelement umfasst, welches hohl ist und zur Führung eines gasförmigen oder flüssigen Wärmeträgers vorgesehen ist. Bei dieser Variante der Erfindung erfüllt das Tragelement also einen Doppelnutzen, indem es einerseits Biege-/Scherkräfte aufnimmt, andererseits auch zur Temperierung des Akkumulators beziehungsweise dessen Zellen beiträgt. Durch den erwähnten Doppelnutzen kann die Anzahl der für einen Akkumulator benötigten Bauteile merklich reduziert werden.

Besonders vorteilhaft ist es in diesem Zusammenhang, wenn ein Hohlraum des Tragelements mit einem durch das plattenförmige Zwischenelement gebildeten Kanal in Verbindung steht. Auf diese Weise kann ein Wärmeträger über ein Tragelement zugeführt und durch die Kanäle, welche durch das Zwischenelement gebildet werden, geleitet werden. Dadurch kann der Akkumulator besonders effizient temperiert werden. Selbstverständlich kann der Vorlauf und Rücklauf zu den genannten Kanälen auch durch Elemente ohne tragende Funktion gebildet sein.

Besonders vorteilhaft ist es zudem, wenn das Tragelement Ausnehmungen und/oder schalenförmige Vertiefungen zur Aufnahme der Zellen umfasst. Auf diese Weise ist eine Positionierung der Zellen besonders einfach, indem diese in die Ausnehmungen/Vertiefungen des Tragelements eingesetzt beziehungsweise eingeklebt werden. Insbesondere bei einer Verklebung ergibt sich ein relativ stabiler Verbund.

Günstig ist es schließlich, wenn zumindest zwischen zwei spannungserzeugenden Zellen ein kreuzförmiges Zwischenelement und/oder ein L-förmiges Zwischenelement und/oder ein T-förmiges Zwischenelement und/oder ein I-förmiges beziehungsweise H-förmiges Zwischenelement und/oder ein schalenförmiges Zwischenelement angeordnet ist. Auf diese Weise können die Zellen einerseits zueinander in Position gehalten werden, andererseits ist damit auch eine Übertragung von Kräften von einer Zelle zur nächsten sehr gut möglich. In einer Ausgestaltungsvariante der Erfindung wird nämlich die mechanische Struktur der Zellen genutzt, um eine im Akkumulator entstehende Biegebelastung aufzunehmen. Häufig besitzen die Zellen einen relativ massiven Metallmantel. Beispielweise befindet sich bei sogenannten "Metal-Can"-Zellen die gerollte Zell-Chemie in einer Metallhülle, die äußerst stabil ist und damit das Innenleben der Zelle schützt. Somit kann wenigstens ein Teil der in einem Akkumulator entstehenden Biege-/Scherbeanspruchung über diese Zellwände geleitet werden. Eine Tragestruktur zur Aufnahme der Zellen - sofern eine solche überhaupt notwendig ist - kann daher entsprechend fragiler gestaltet werden. Vorteilhaft kann auf diese Weise das Gewicht des Akkumulators und somit des Fahrzeugs beträchtlich reduziert werden. Unmittelbar damit einhergehend werden die Fahrleistungen des Automobils verbessert.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: ein erstes Beispiel eines erfindungsgemäßen Akkumulators, bei dem die Zellen miteinander verklebt sind;
- Figur 2: ein zweites Beispiel eines erfindungsgemäßen Akkumulators, bei dem die Zellen mit Hilfe von Zug-/Spannbändern gegeneinander vorgespannt werden;
- Figur 3: ein drittes Beispiel eines erfindungsgemäßen Akkumulators, bei dem die Zellen miteinander verschraubt sind;
- Figur 4: eine Zelle mit daran befestigten Haltevorrichtungen;
- Figur 5: Zellen wie in Figur 4 dargestellt, welche über Verbindungselemente miteinander verbunden werden und so einen Akkumulator bilden in Schrägansicht;
- Figur 6: den Akkumulator aus Fig. 5 in Seitenansicht;
- Figur 7: verschiedene Formen von Akkumulatoren, welche aus Zellen wie in Fig. 4 dargestellt gebildet werden;
- Figur 8: ein schalenförmiges Zwischenelement, welches zur Anordnung zwischen Zellen vorgesehen ist;
- Figur 9: einen Ausschnitt eines Akkumulators, welcher mit Hilfe von Zwischenelementen wie in Fig. 8 dargestellt aufgebaut ist;
- Figur: 10 den Akkumulator aus Fig. 9 mit einer zusätzlichen Kühlplatte und einer zusätzlichen Deckplatte in Seitenansicht;
- Figur 11: den Akkumulator aus Fig. 10 in Explosionsdarstellung;
- Figur 12: den fertig montierten Akkumulator aus Fig. 11 in Schrägansicht;
- Figur 13: einen Akkumulator mit einem zwischen mehreren Zellen angeordneten Tragelement;
- Figur 14: eine Detailansicht des in Fig. 13 dargestellten Akkumulators;
- Figur 15: den Akkumulator aus Fig. 14, welcher in ein Fahrzeug eingebaut ist und mit Abdeckplatten vor Umwelteinflüssen geschützt wird;
- Figur 16: einen Akkumulator mit einem Tragelement, welches schalenförmige Vertiefungen aufweist, in Explosionsdarstellung;
- Figur 17: den fertig montierten Akkumulator aus Fig. 16 in Schrägansicht;
- Figur 18: den fertig montierten Akkumulator aus Fig. 16 in Seitenansicht;
- Figur 19: den Akkumulator aus Fig. 17 mit einer zusätzlichen elektronischen Schaltung;
- Figur 20: einen Akkumulator mit plattenförmigen Zwischenelementen, welche elastische Rippen aufweisen, im Schrägschnitt;
- Figur 21: den Akkumulator aus Fig. 20 in Draufsicht;
- Figur 22: eine Platte mit elastischen Rippen in Detailansicht;
- Figur 23: den Akkumulator aus Fig. 21 mit einer zusätzlichen oberen und unteren Abdeckung in Seitenansicht;
- Figur 24: eine Detailansicht des Akkumulators aus Fig. 23 und
- Figur 25: einen Akkumulator mit einem hohlen Tragelement, das zur Führung eines Wärmeträgers vorgesehen ist;

### DETAILIERTE BESCHREIBUNG DER ERFINDUNG

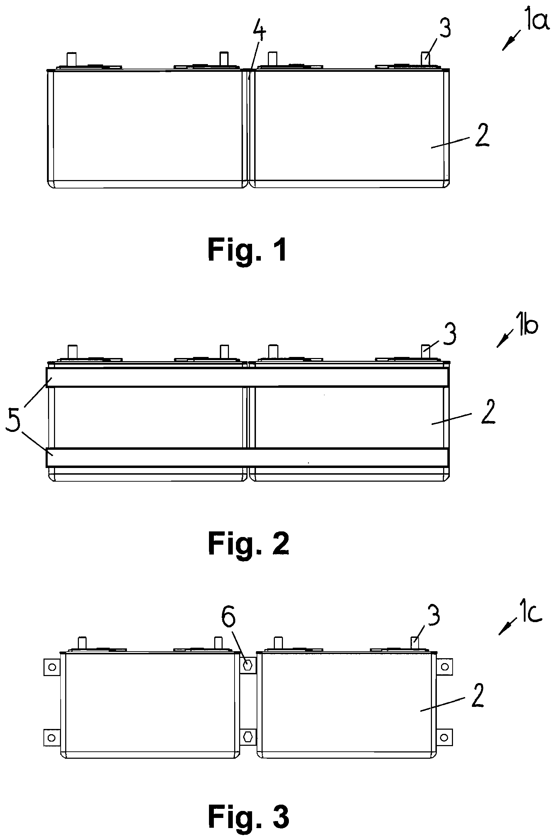

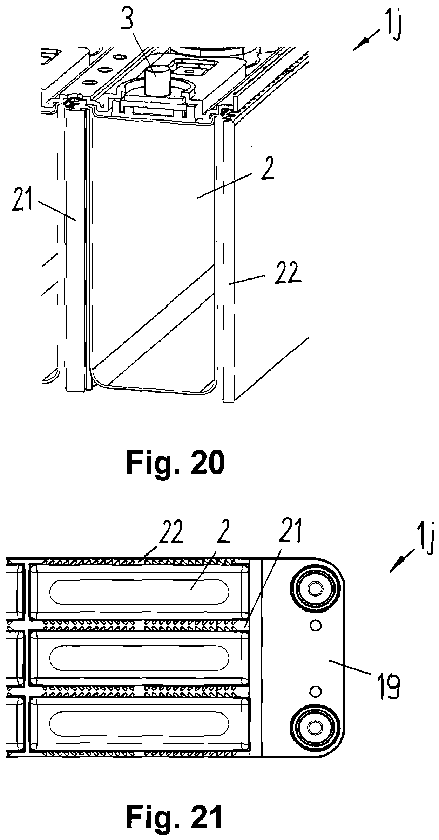

Die Figuren 1 bis 19 zeigen, auf welche Art und Weise ein Akkumulator unter Zuhilfenahme verschiedener Verbindungsmittel gebildet werden kann. In diesen Verbund wird gemäß der vorliegenden Erfindung ein plattenförmiges Zwischenelement eingefügt, welches im Detail in den Figuren 20, 21, 22 und 25 dargestellt ist

Fig. 1 zeigt ein erstes Beispiel eines erfindungsgemäßen Akkumulators 1a in Seitenansicht. Dieser umfasst mehrere spannungserzeugende Zellen 2 mit jeweils zwei Anschlusskontakten 3. Im gezeigten Beispiel sind die Zellen 2 an deren Schmalseite mit Hilfe einer Klebeschicht 4 miteinander verklebt, sodass der Akkumulator 1a auch ohne weitere Bauteile eine in sich geschlossene Einheit bildet. Die Zellen 2, insbesondere deren Gehäuse (häufig aus Metall bestehend) sowie die Verklebung, sind in diesem Beispiel so ausgelegt, dass sich der Akkumulator 1a "selbst trägt".

Fig. 2 zeigt eine alternative Ausführungsform eines erfindungsgemäßen Akkumulators 1b, welcher dem in Fig. 1 dargestellten Akkumulator 1a sehr ähnlich ist. Anstelle einer Verklebung werden die Zellen 2 jedoch durch zwei Spann-/Zugbänder 5 aneinander gedrückt. Auf diese Weise wird eine Druckvorspannung erzeugt, die ein Auseinanderklaffen des Spalts zwischen den Zellen 2 in dessen unteren Bereich verhindern, wenn der Akkumulator 1b seitlich hochgehoben wird. Anstelle von Spann-/Zugbändern 5 können auch Zugstangen vorgesehen sein, z.B. Stiftschrauben, welche die Zellen 2 über Platten aneinander drücken. Selbstverständlich können diese Maßnahmen zusätzlich zu einer Verklebung vorgesehen werden.

Fig. 3 zeigt eine alternative Ausführungsform eines erfindungsgemäßen Akkumulators 1c, welche dem in Fig. 1 dargestellten Akkumulator 1a ebenfalls sehr ähnlich ist. Anstelle einer Verklebung werden die Zellen 2 nun aber mit Hilfe von Schrauben 6 miteinander verschraubt. Zu diesem Zweck können Laschen an die Zellen 2 geklebt oder geschweißt sein. In den Figuren 1 bis 3 können auch kreuzförmige Zwischenelemente und/oder L-förmige Zwischenelemente und/oder T-förmige Zwischenelemente und/oder I-förmige Zwischenelemente angeordnet werden, so wie dies in den nachfolgenden Figuren dargestellt ist.

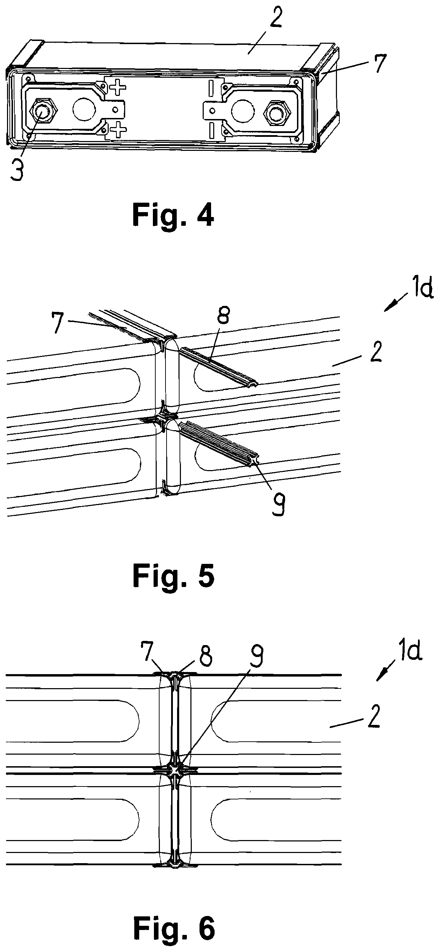

Die Figuren 4 bis 6 zeigen eine weitere Ausführungsform eines erfindungsgemäßen Akkumulators 1d, beziehungsweise einen Ausschnitt davon. Bei dieser Variante werden am Gehäuse der Zellen 2 Befestigungselemente 7 vorgesehen. Diese können auf das genannte Gehäuse aufgeklebt oder aufgeschweißt sein, z.B. in Form von Halte- bzw. Befestigungswinkeln. Zum Verbinden mehrerer Zellen 2 werden L-förmige Zwischen- oder Verbindungselemente 8 beziehungsweise kreuzförmige Zwischen- oder Verbindungselemente 9 mit den Befestigungselementen 7 verbunden, sodass ein selbsttragender Zellverbund entsteht. Dazu kann ein Befestigungselement 7 Einbuchtungen/Fortsätze aufweisen in die Fortsätze/Einbuchtungen der Verbindungselemente 8, 9 eingreifen. Beispielsweise kann so eine Nut/Feder-Verbindung, eine Stift/Loch-Verbindung oder auch eine Schwalbenschwanzverbindung zwischen den Verbindungselementen 8, 9 und den Befestigungselementen 7 realisiert werden. Zur Isolation der Zellen 2 untereinander können die Verbindungselemente 9 darüber hinaus aus einem Isolator bestehen, beispielsweise aus Kunststoff oder Keramik. Denkbar ist auch, dass die Einbuchtungen/Fortsätze direkt in das Gehäuse der Zellen 2 eingearbeitet sind und Befestigungselemente 7 somit entfallen können. Mehrere L-förmige Zwischen- oder Verbindungselemente 8 beziehungsweise mehrere kreuzförmige Zwischen- oder Verbindungselemente 9 können überdies zu einem schalenförmigen, I-förmigen oder H-förmigen Zwischenelement kombiniert werden.

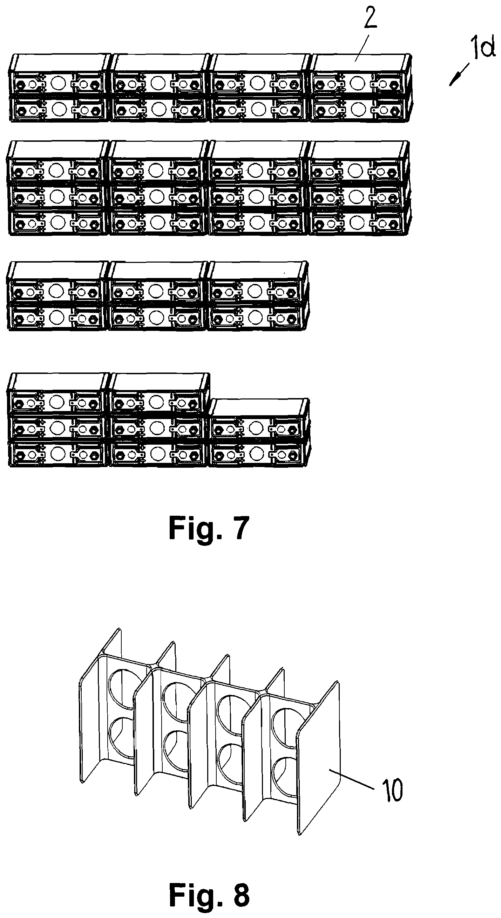

Der Akkumulator 1d kann dabei auf beliebige Weise modular zusammengestellt werden. Beispielsweise zeigt die Fig. 7 dazu verschiedene Ausführungsformen, konkret einen 4x2-Verbund, einen 4x3-Verbund, einen 3x2-Verbund sowie einen stufenförmigen Verbund. Selbstverständlich sind die dargestellten Varianten nicht bloß für eine Verbindungsmethode entsprechend der Figuren 4 bis 6 geeignet, sondern es können natürlich auch andere Verbindungsmethoden zur Herstellung solcher Akkumulatoren angewendet werden (beispielsweise die in den Figuren 1 bis 3 dargestellten Methoden).

Die Figuren 8 bis 9 zeigen eine weitere Variante eines erfindungsgemäßen Akkumulators 1e, bei dem mehrere Zellen 2 mit Hilfe von schalenförmigen Zwischenelementen 10 miteinander verbunden werden. An den Befestigungs-/Auflagepunkten sind Endelemente 11 vorgesehen, welche die Montage des Akkumulators 1e in zum Beispiel einem Fahrzeug erlauben. Zur Erzielung eines selbsttragenden Verbunds werden die Zellen 2 mit den Zwischenelementen 10 und den Endelementen 11 beispielsweise verklebt.

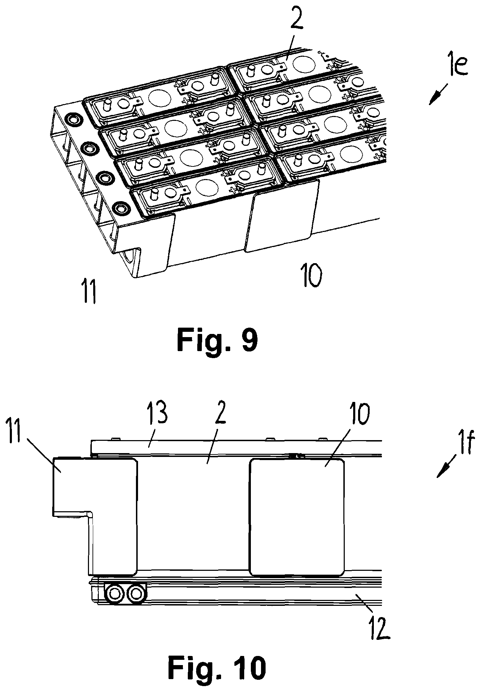

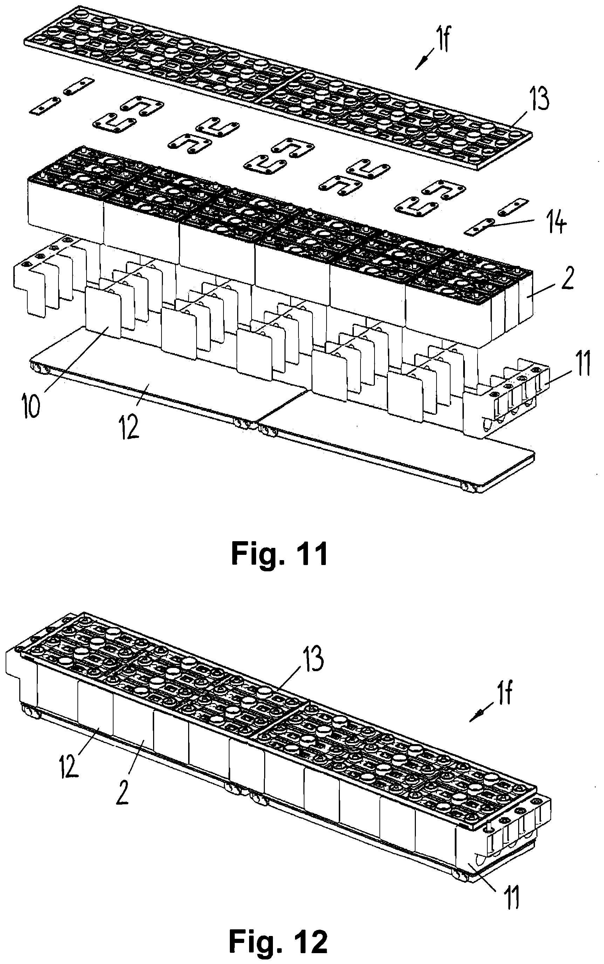

Die Figuren 10 bis 12 zeigen eine Abwandlung des in den Figuren 8 bis 9 dargestellten Akkumulators 1e in Form eines Akkumulators 1f, welcher zusätzlich zwei Kühlplatten 12 zur Führung eines gasförmigen oder flüssigen Wärmeträgers und eine Deckplatte 13 aufweist. Zusätzlich sind auch Zellverbinder 14 dargestellt, welche die elektrische Verbindung der Zellen 2 übernehmen (Anmerkung: in den vorangegangenen Figuren wurden Zellverbinder der einfacheren Darstellung halber weggelassen). Fig. 10 zeigt den Akkumulator 1f in Seitenansicht, Fig. 11 in Explosionsdarstellung und Fig. 12 in Schrägansicht.

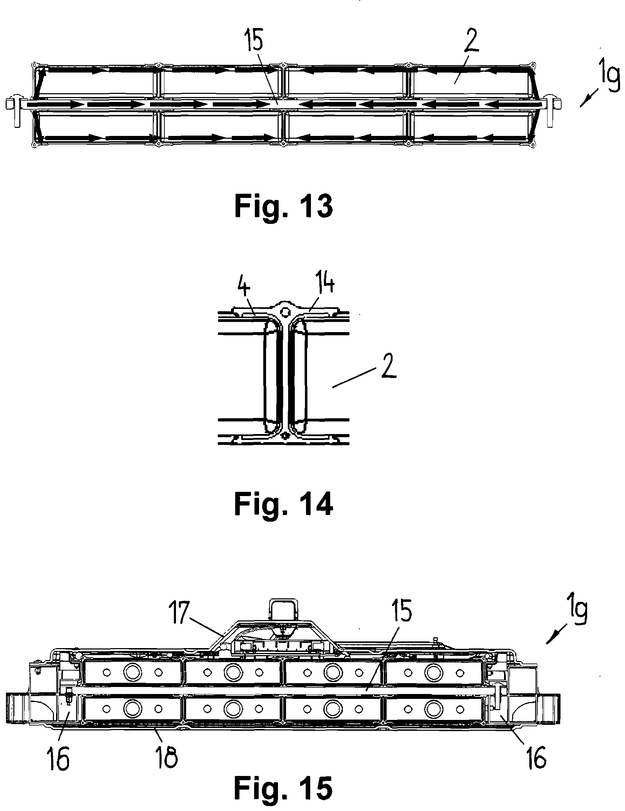

Die Figuren 13 bis 15 zeigen eine weitere Variante eines erfindungsgemäßen Akkumulators 1g, bei dem zwischen den Zellen I-förmige beziehungsweise H-förmige Zwischenelemente 14 angeordnet sind, über welche die Zellen 2 mit Hilfe von Klebeschichten 4 miteinander verbunden sind. Zusätzlich umfasst der Akkumulator 1g ein Tragelement 15, beispielsweise ein Aluminiumprofil.

Fig. 13 zeigt den Akkumulator 1g zusätzlich mit Pfeilen, welche den Kraftfluss symbolisieren sollen. Dabei ist zu beachten, dass dies nicht implizieren soll, dass in dem Bauteil nur Druckspannungen herrschen. Selbstverständlich herrschen im unteren Bereich des Akkumulators 1g Zugspannungen, wenn dieser nach unten gebogen wird, bzw. links und rechts horizontal gelagert wird. Fig. 14 zeigt eine Detailansicht einer Verklebung von zwei Zellen 2, und Fig. 15 zeigt schließlich den an zwei Längsträgern 16 eines Fahrzeugs befestigten (z.B. angeschraubten) Akkumulator 1g. Dieser ist mit einer oberen Abdeckung 17 und mit einer unteren Abdeckung 18 zusätzlich vor Umwelteinflüssen geschützt.

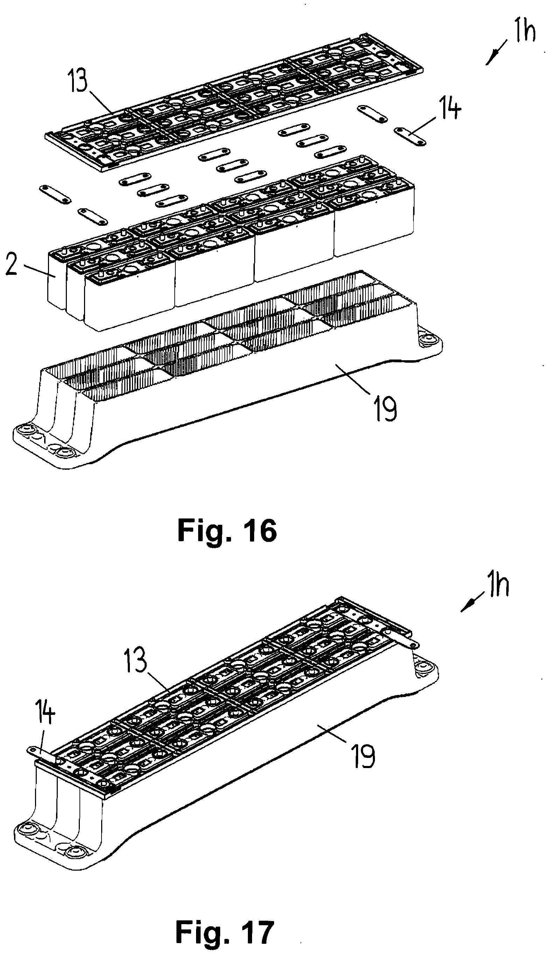

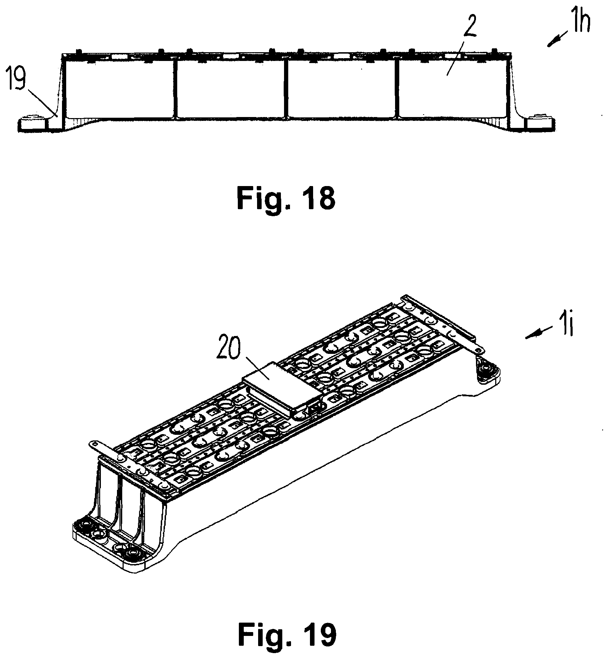

Die Figuren 16 bis 18 zeigen eine weitere Variante eines erfindungsgemäßen Akkumulators 1h, welcher den in den Figuren 9 bis 12 dargestellten Akkumulatoren 1e und 1f recht ähnlich ist. Im Unterschied dazu umfasst der Akkumulator 1h aber ein Tragelement 19 welches Ausnehmungen beziehungsweise schalenförmige Vertiefungen zur Aufnahme der Zellen 2 umfasst. Die Stege der gezeigten Schalen können auch teilweise entfallen, beispielsweise die Querstege des Tragelements 19. Dies gilt insbesondere dann, wenn zwischen den Zellen 2 kreuzförmige, L-förmige, T-förmige, I-förmige beziehungsweise H-förmige Zwischenelemente 8, 9, 14 angeordnet sind. Das Tragelement 19 kann beispielsweise aus relativ weichem Kunststoff bestehen. Insbesondere wenn die Zellen 2 in das Tragelement 19 eingeklebt werden, entsteht dennoch eine recht tragfähige Struktur. Fig. 16 zeigt den Akkumulator 1h in Explosionsdarstellung, Fig. 17 in Schrägansicht und Fig. 18 in Seitenansicht.

Fig. 19 zeigt eine Variante eines erfindungsgemäßen Akkumulators 1i welcher dem in den Figuren 16 bis 18 dargestellten Akkumulator 1h sehr ähnlich ist. Im Unterschied dazu umfasst der Akkumulator 1i aber auch eine oben auf dem Akkumulator 1i angeordnete elektronische Schaltung 20, beispielsweise eine Zellüberwachungseinheit welche zum Beispiel für das Balancing der Zellen 2 zuständig ist.

Die Figuren 20 bis 22 zeigen nun einen Akkumulator 1j, bei dem zumindest zwischen zwei spannungserzeugenden Zellen 2 ein erfindungsgemäßes, plattenförmiges Zwischenelement 21 angeordnet ist, welches auf beiden Seiten elastische Rippen 24 aufweist. Am Rand einer Zelle 2 ist darüber hinaus ein plattenförmiges Zwischenelement 22 vorgesehen, welches bloß auf der der Zelle 2 zugewandten Seite elastische Rippen 24 aufweist. Selbstverständlich wäre es aber auch möglich, dass das Zwischenelement 22 zwischen zwei Zellen 2 angeordnet ist.

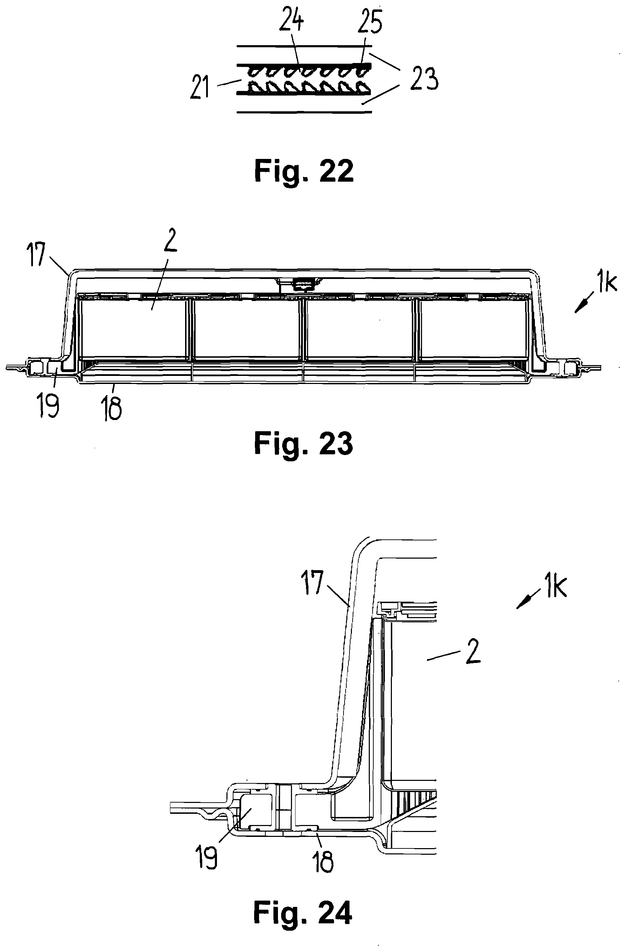

Die Rippen 24 liegen an einer Zelle 2 an und ermöglichen wegen ihrer Elastizität einen Längenausgleich zwischen den Zellen 2. Zudem bildet eine Rille zwischen zwei Rippen 24 gemeinsam mit den Gehäuse 23 der Zelle 2 einen Kanal 25, welcher zur Führung eines gasförmigen oder flüssigen Wärmeträgers vorgesehen ist. Die Zwischenelemente 21 und 22 erfüllen damit einen Doppelnutzen. Die Zellen 2 sind samt den Zwischenelementen 21 und 22 in einem Tragelement 19 angeordnet. Fig. 20 zeigt den Akkumulator 1j in Schrägansicht, Fig. 21 in Draufsicht, und Fig. 22 zeigt die Bildung eines Kanals 25 in Detailansicht.

Im gezeigten Beispiel sind die elastischen Rippen 24 bezogen auf den Querschnitt schräg ausgerichtet (siehe Fig. 22). Die Elastizität beziehungsweise Federkonstante der plattenförmigen Zwischenelemente 21 und 22 kann daher besonders gut auf einen vorgegebenen Wert eingestellt werden, beispielsweise durch entsprechende Neigung der Rippen 24. Denkbar wäre aber auch, dass die Rippen 24 senkrecht aus den plattenförmigen Zwischenelementen 21 und 22 herausragen.

Im gezeigten Beispiel sind die Rippen 24 auf einer Seite des plattenförmigen Zwischenelements 21 überdies direkt gegenüber den Rippen 24 auf der anderen Seite des plattenförmigen Zwischenelements 21 angeordnet. In Fig. 22 sind daher die oben liegenden Rippen 24 direkt oberhalb der darunter liegenden Rippen 24 angeordnet. Denkbar wäre aber auch, dass die Rippen 24 auf einer Seite des plattenförmigen Zwischenelements 21 gegenüber den Rippen 24 auf der anderen Seite des plattenförmigen Zwischenelements 21 versetzt sind. In Fig. 22 wären dann zum Beispiel die oben liegenden Rippen 24 oberhalb der darunter liegenden Kanäle 25 angeordnet. Wie leicht vorstellbar ist, wird die Mittellinie des plattenförmigen Zwischenelements 21 bei Kompression desselben dann schlangenförmig beziehungsweise S-förmig verformt. Das plattenförmige Zwischenelement 21 ist in dieser Ausführungsform besonders weich und kann besonders stark komprimiert werden.

Fig. 19 zeigt die plattenförmigen Zwischenelemente 21 und 22 in einem Verbund, welcher im Wesentlichen durch die Zellen 2 und das Tragelement 19 gebildet ist. Alternativ oder zusätzlich können aber auch die anderen in den Figuren 1 bis 19 gezeigten Verbindungsmethoden in Verbindung mit den erfindungsgemäßen plattenförmigen Zwischenelementen 21 und 22 angewendet werden. Insbesondere können kreuzförmige, L-förmige, T-förmige, I-förmige beziehungsweise H-förmige Zwischenelemente 8, 9, 14 in Kombination mit dem erfindungsgemäßen plattenförmigen Zwischenelementen 21 und 22 verwendet werden.

Beispielsweise ist das plattenförmige Zwischenelement 21 oder 22 in dem Bereich der Zellen 2 angeordnet, welcher frei von kreuzförmigen, L-förmigen, T-förmigen, I-förmigen beziehungsweise H-förmigen Zwischenelementen 8, 9, 14 ist, sodass sich ein weitgehend starrer Zellverbund ergibt. Alternativ können die plattenförmigen Zwischenelemente 21 und 22 auch auf dem kreuzförmigen, L-förmigen, T-förmigen, I-förmigen beziehungsweise H-förmigen Zwischenelementen 8, 9, 14 aufliegen, insbesondere auf den Seitenflanken derselben. Selbstverständlich ist es auch möglich, dass die plattenförmigen Zwischenelemente 21 und 22 zwischen einer Zelle 2 und einem kreuzförmigen, L-förmigen, T-förmigen, I-förmigen beziehungsweise H-förmigen Zwischenelement 8, 9, 14 angeordnet werden, wodurch der Zellverbund aber unter Umständen an Starrheit verliert.

Die Figuren 23 bis 24 zeigen nun eine weitere Variante eines erfindungsgemäßen Akkumulators 1k, welcher dem in den Figuren 20 bis 22 gezeigten Akkumulator 1j sehr ähnlich ist. Im Unterschied dazu sind um den das Tragelement 19, die Zellen 2 sowie die Zwischenelemente 21 und 22 umfassenden Verbund eine obere Abdeckung 17 und eine untere Abdeckung 18 angeordnet. Die Abdeckungen 17 und 18 können natürlich auch eine Tragefunktion übernehmen, d.h. einen Teil der auf den Akkumulator 1k wirkenden Biegebelastung übernehmen. Um ein Ausknicken bzw. Ausbeulen der vergleichsweise dünnen Abdeckungen 17 und 18 zu vermeiden, können diese auch mit Sicken und/oder Rippen versehen sein.

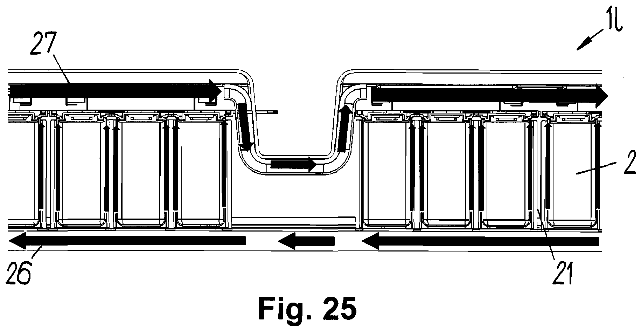

Fig. 25 zeigt schließlich noch eine weitere Variante eines erfindungsgemäßen Akkumulators 11, welcher eine bereits in Figur 20 gezeigte Anordnung von Zellen 2 und Zwischenelementen 21 und 22, sowie ein unteres Tragelement 26 und ein oberes Tragelement 27 umfasst.

Beide Tragelemente 26 und 27 sind hohl und zur Führung eines gasförmigen oder flüssigen Wärmeträgers vorgesehen. Konkret fließt der Wärmeträger über das untere Tragelement 26 (bildet den Zulauf), die Kanäle 25 (siehe auch Fig. 22) und das obere Tragelement 27 (bildet den Ablauf). Der Akkumulator 11 kann so besonders effizient temperiert (gekühlt oder beheizt) werden.

Da der Druck des Wärmeträgers entlang der Tragelemente 26 und 27 variiert, können zur Erreichung eines gleichmäßigen Durchflusses durch die Kanäle 25 unterschiedlich große Löcher in den Tragelementen 26 und 27, über welche der Wärmeträger zu oder von den Kanälen 25 fließt, vorgesehen werden. Selbstverständlich kann auch das obere Tragelement 27 als Zulauf und das untere Tragelement 26 als Ablauf vorgesehen werden.

An dieser Stelle wird angemerkt, dass die in den Figuren 1 bis 25 dargestellten Akkumulatoren 1a.. 1l auch variiert, insbesondere miteinander kombiniert werden können.

Schließlich wird darauf hingewiesen, dass es sich bei den Figuren 1 bis 25 teilweise um stark vereinfachte Prinzipbilder handelt. In der Realität kann ein erfindungsgemäßer Akkumulator la.. 11 auch von der Darstellung abweichen, insbesondere zusätzliche hier nicht dargestellte Bauteile umfassen. Schließlich wird angemerkt, dass die Darstellungen nicht notwendigerweise maßstäblich sind und Proportionen von realen Bauteilen auch von den Proportionen der dargestellten Bauteile abweichen können.

## Patentansprüche

1. Akkumulator (1a..1l) mit mehreren spannungserzeugenden Zellen (2), wobei zumindest zwischen zwei spannungserzeugenden Zellen (2) ein plattenförmiges Zwischenelement (21) angeordnet ist, **dadurch gekennzeichnet, dass** das Zwischenelement zumindest auf einer Seite elastische Rippen (24) aufweist, wobei die elastischen Rippen (24) bezogen auf den Querschnitt schräg ausgerichtet sind, wobei die Rippen (24) an einer Zelle (2) anliegen und sowohl einen Längenausgleich zwischen den Zellen (2) ermöglichen als auch einen Kanal (25) zur Führung eines gasförmigen oder flüssigen Wärmeträgers bilden und wobei durch die Neigung der Rippen (24) die Federkonstante des Zwischenelementes (21) einstellbar ist.

2. Akkumulator (1a.. 1l) nach Anspruch 1, **dadurch gekennzeichnet, dass** das plattenförmige Zwischenelement (21) beidseitig elastische Rippen (24) aufweist.

3. Akkumulator (1a.. 1l) nach Anspruch 2, **dadurch gekennzeichnet, dass** die Rippen (24) auf einer Seite des plattenförmigen Zwischenelements (21) gegenüber den Rippen (24) auf der anderen Seite des plattenförmigen Zwischenelements (21) versetzt sind.

4. Akkumulator (1a.. 1l) nach einem der Ansprüche 1 bis 3, **dadurch gekennzeichnet, dass** eine Rille zwischen zwei Rippen (24) gemeinsam mit der Zelle (2) den Kanal (25) begrenzt, welcher zur Führung eines gasförmigen oder flüssigen Wärmeträgers vorgesehen ist.

5. Akkumulator (1a.. 1l) nach einem der Ansprüche 1 bis 4, **dadurch gekennzeichnet, dass** zumindest zwei spannungserzeugende Zellen (2) und zumindest ein Zwischenelement (21) miteinander verklebt sind.

6. Akkumulator (1a.. 1l) nach einem der Ansprüche 1 bis 5, **dadurch gekennzeichnet, dass** zumindest zwei spannungserzeugende Zellen (2) und zumindest ein Zwischenelement (21) miteinander verschraubt sind.

7. Akkumulator (1a.. 1l) nach einem der Ansprüche 1 bis 6, **dadurch gekennzeichnet, dass** zumindest zwei spannungserzeugende Zellen (2) und zumindest ein Zwischenelement (21) mit Hilfe von Zugbändern (5) oder Zugstangen, welche eine Druckvorspannung erzeugen, aneinander gedrückt werden.

8. Akkumulator (1a.. 1l) nach einem der Ansprüche 1 bis 7, **gekennzeichnet durch** ein Tragelement (19), welches hohl ist und zur Führung eines gasförmigen oder flüssigen Wärmeträgers vorgesehen ist.

9. Akkumulator (1a.. 1l) nach Anspruch 8, **dadurch gekennzeichnet, dass** ein Hohlraum des Tragelements (26, 27) mit einem Kanal (25) in Verbindung steht.

10. Akkumulator (1a..1l) nach Anspruch 8 oder 9, **dadurch gekennzeichnet, dass** das Tragelement (26, 27) Ausnehmungen und/oder schalenförmigen Vertiefungen zur Aufnahme der Zellen (2) umfasst.

11. Akkumulator (1a..1l) nach einem der Ansprüche 1 bis 10, **dadurch gekennzeichnet, dass** zumindest zwischen zwei spannungserzeugenden Zellen (2) ein kreuzförmiges Zwischenelement (9) und/oder ein L-förmiges Zwischenelement (8) und/oder ein T-förmiges Zwischenelement und/oder ein I-förmiges beziehungsweise H-förmiges Zwischenelement (14) und/oder ein schalenförmiges Zwischenelement (10) angeordnet ist.

## Claims

1. Accumulator (1a.. 1l) having a plurality of voltage-generating cells (2), wherein a plate-shaped intermediate element (21) is arranged at least between two voltage-generating cells (2), **characterised in that** the intermediate element has elastic ribs (24) at least on one side, wherein the elastic ribs (24) are aligned obliquely in relation to the cross-section, wherein the ribs (24) bear against a cell (2) and permit both a length compensation between the cells (2) and also form a channel (25) for conducting a gaseous or liquid heat carrier and wherein the spring constant of the intermediate element (21) can be set by the inclination of the ribs (24).

2. Accumulator (1a.. 1l) according to claim 1, **characterised in that** the plate-shaped intermediate element (21) has elastic ribs (24) on both sides.

3. Accumulator (1a.. 1l) according to claim 2, **characterised in that** the ribs (24) on one side of the plate-shaped intermediate element (21) are offset in relation to the ribs (24) on the other side of the plate-shaped intermediate element (21).

4. Accumulator (1a.. 1l) according to one of claims 1 to 3, **characterised in that** a groove between two ribs (24) delimits, together with the cell (2), the channel (25) which is provided for conducting a gaseous or liquid heat carrier.

5. Accumulator (1a.. 1l) according to one of claims 1 to 4, **characterised in that** at least two voltage-generating cells (2) and at least one intermediate element (21) are adhesively bonded to one another.

6. Accumulator (1a.. 1l) according to one of claims 1 to 5, **characterised in that** at least two voltage-generating cells (2) and at least one intermediate element (21) are screwed to one another.

7. Accumulator (1a.. 1l) according to one of claims 1 to 6, **characterised in that** at least two voltage-generating cells (2) and at least one intermediate element (21) are pressed against one another by means of tension straps (5) or tension rods which generate a compressive preload.

8. Accumulator (1a.. 1l) according to one of claims 1 to 7, **characterised by** a support element (19) which is hollow and which is provided for conducting a gaseous or liquid heat carrier.

9. Accumulator (1a.. 1l) according to claim 8, **characterised in that** a cavity of the support element (26, 27) is connected to a channel (25).

10. Accumulator (1a.. 1l) according to claim 8 or 9, **characterised in that** the support element (26, 27) comprises recesses and/or shell-shaped depressions for receiving the cells (2).

11. Accumulator (1a.. 1l) according to one of claims 1 to 10, **characterised in that** a cross-shaped intermediate element (9) and/or an L-shaped intermediate element (8) and/or a T-shaped intermediate element and/or an I-shaped or H-shaped intermediate element and/or a shell-shaped intermediate element (10) is arranged at least between two voltage-generating cells (2).

## Revendications

1. Accumulateur (1a..1l) comprenant plusieurs éléments (2) générateurs de tension, un élément intermédiaire (21) en forme de plaque étant agencé au moins entre deux éléments (2) générateurs de tension, **caractérisé en ce que** l'élément intermédiaire comprend, au moins sur une face, des nervures élastiques (24), les nervures élastiques (24) étant orientées de manière oblique par rapport à la section transversale, les nervures (24) s'appliquant contre un élément (2), et permettant une compensation de la longueur entre les éléments (2) et formant également un canal (25) pour le guidage d'un agent caloporteur gazeux ou liquide, et la constante de rappel de l'élément intermédiaire (21) pouvant être réglée par l'inclinaison des nervures (24).

2. Accumulateur (1a..1l) selon la revendication 1, **caractérisé en ce que** l'élément intermédiaire (21) en forme de plaque présente de part et d'autre des nervures (24) élastiques.

3. Accumulateur (1a..1l) selon la revendication 2, **caractérisé en ce que** les nervures (24) situées sur une face de l'élément intermédiaire (21) en forme de plaque sont décalées par rapport aux nervures (24) situées sur l'autre face de l'élément intermédiaire (21) en forme de plaque.

4. Accumulateur (1a..1l) selon l'une quelconque des revendications 1 à 3, **caractérisé en ce qu'**une rainure entre deux nervures (24) délimite, conjointement avec l'élément (2), le canal (25), lequel sert au guidage d'un agent caloporteur gazeux ou liquide.

5. Accumulateur (1a..1l) selon l'une quelconque des revendications 1 à 4, **caractérisé en ce qu'**au moins deux éléments (2) générateurs de tension et au moins un élément intermédiaire (21) sont collés ensemble.

6. Accumulateur (1a..1l) selon l'une quelconque des revendications 1 à 5, **caractérisé en ce qu'**au moins deux éléments (2) générateurs de tension et au moins un élément intermédiaire (21) sont vissés ensemble.

7. Accumulateur (1a..1l) selon l'une quelconque des revendications 1 à 6, **caractérisé en ce qu'**au moins deux éléments (2) générateurs de tension et au moins un élément intermédiaire (21) sont pressés les uns contre les autres à l'aide de bandes de traction (5) ou de barres de traction, lesquelles génèrent une précontrainte de compression.

8. Accumulateur (1a..1l) selon l'une quelconque des revendications 1 à 7, **caractérisé par** un élément porteur (19), lequel est creux et sert au guidage d'un agent caloporteur gazeux ou liquide.

9. Accumulateur (1a..1l) selon la revendication 8, **caractérisé en ce qu'**une cavité de l'élément porteur (26, 27) est reliée à un canal (25).

10. Accumulateur (1a..1l) selon la revendication 8 ou 9, **caractérisé en ce que** l'élément porteur (26, 27) comporte des évidements et/ou des creux en forme de coque pour la réception des éléments (2).

11. Accumulateur (1a..1l) selon l'une quelconque des revendications 1 à 10, **caractérisé en ce qu'**un élément intermédiaire en forme de croix (9) et/ou un élément intermédiaire en forme de L (8) et/ou un élément intermédiaire en forme de T et/ou un élément intermédiaire en forme de I ou en forme de H (14) et/ou un élément intermédiaire en forme de coque (10) sont agencés au moins entre deux éléments (2) générateurs de tension.
